# EUROPEAN PATENT SPECIFICATION

(11) **EP 2 909 118 B1**
(45) Date of publication and mention of the grant of the patent: **21.03.2018**
(21) Application number: 13801773.6
(22) Date of filing: 23.09.2013
(51) Int. Cl.: B65G 51/01, A23N 12/02, B65B 69/00, B65B 25/04

(54) **IMPROVED APPARATUS FOR EMPTYING CONTAINERS OF HORTICULTURAL PRODUCTS**
VERBESSERTE VORRICHTUNG ZUM ENTLEEREN VON BEHÄLTERN VON GARTENBAUPRODUKTEN
APPAREIL AMÉLIORÉ POUR LE VIDAGE DE CONTENEURS DE PRODUITS HORTICOLES

(30) Priority: 11.10.2012 IT PN20120062
(43) Date of publication of application: 26.08.2015
(73) Proprietor: Unitec S.p.A., 48022 Lugo (IT)
(72) Inventor: BENEDETTI, Luca, I-48020 Savarna (RA) (IT)
(74) Representative: Gonella, Mario
(86) International application number: PCT/IB2013/058778
(87) International publication number: WO 2014/057378

(56) References cited:
- EP-A2- 0 167 082
- DE-U1-202009 014 553
- IT-B- 1 065 610
- US-A- 5 413 131
- US-B1- 6 224 315

## Description

The present invention relates to an improved apparatus for emptying containers, or generally crates, often called "BINS", used to gather and heap horticultural products, filled with the same products, and for separating the items generally associated to said products, typically such as leaves, twigs, etc. so as to have, by means of simple and automatic processes, a succession of single products already offloaded from said containers and already cleaned or cleared from any extraneous items.

It is known that, in the trading sector of horticultural products, in particular fruits, and typically apples, pears, peaches, cherries, it is usual to pick up the single products and heap them in determined containers open at the top, such as crates.

Since said products are very delicate and it is absolutely required to avoid any rough handling or moving - which inevitably would damage them at least in their exterior appearance, anyway relevant for the value of the fruit itself, for a long time it has been used the technique of transferring said crates above basins filled with water, preferably flowing water, and immerse and at the same time offload said crates onto or directly into the water contained in the same basin.

In this way the single products are, in practice, directly offloaded from their crate into the water, so that they can be easily singled out, or at least separated one from the other, in order to process them with known techniques.

In fact, from the same basin, said products are transported by a slight flow imparted to the water in the basin to a flexible conveyor which is partially immersed in the water and partially emerges from that, and that in the emersion zone it intercepts and grips the single horticultural products.

This method is used above all to enhance high quality products, which of course would not be enhanced if the same products were heaped helter-skelter, and therefore often damaged in the handling of the respective crates wherein they are heaped after having been picked up from the tree.

One of the most known and used techniques to offload the products from the crates is that of overturning the same crates engaging them with suitable gripping means to the respective base, and rotating around a horizontal axis and so parallel to the liquid surface; by means of the controlled rotation of the crates, the relative products are offloaded out of them, and therefore they fall gently into the liquid below.

Such technique is shown in various patents, as for example in
EP 0 167 082, --- US 6,224,315 B1 --- US 2,894,516.

Also patent EP 0 525, 331 A1 discloses a similar method for emptying crates, even if, in this case, the single crates are immersed in the liquid through a technical equivalent, that is through a simple and single vertical motion.

Though such technique has shown itself as simple and efficient for emptying the crates and freeing the single products, anyway it has repeatedly been observed that, when actually employed, it occurs an inconvenience which worsens the operation of emptying the crates, and which often seriously compromises singling out the products, a necessary operation in order to be able to size them up one by one.

Such inconvenience consists in the fact that not only the horticultural products are introduced into the crates but also other extraneous items which usually are captured and intercepted during the harvest, and that therefore are automatically associated with the single products during their transport and handling; such extraneous items are mainly leaves, but also cobwebs, twigs, insects, etc....

If said horticultural products are not soon separated from said extraneous items, it happens that they interfere with the handling and the subsequent processing of the same products, compromising their functionality giving origin to disorganization in these operations and also, in the worst cases, remaining associated with the same products until their final packaging for the sale, worsening therefore the quality perceived by the buyer.

From patent US 2001/0047814 it is known a method for sterilizing fresh fruit, by means of introducing it in a liquid suitably treated with disinfection means, and its subsequent transport through the liquid while the same fruit is carried and kept immersed.

Anyway in such patent the extraneous items are intercepted by a special grid (85) designed and made to intercept considerably big items, such as leaves.

Anyway it is not ensured in any way that all leaves, and in any case all floating items, are intercepted by said grid; moreover, and this is the most serious inconvenience, the items intercepted by the grid remain there until they are after removed manually, and this makes it necessary to interrupt the processing, and they impose important additional costs.

From patent US 6,082,382 it is known how to carry on a method for washing vegetable products using a canal filled with water and wherein the single items are introduced.

Also in this case the extraneous items are intercepted and got rid of; anyway the extraneous items which are gotten rid of are only those which sink, such as dirt, heavy sediments etc., and sediment on the canal bottom, from which they are from time to time removed manually; on the contrary those extraneous items, such as leaves and twigs, are not removed as they float and therefore do not sediment onto the canal bottom.

On the contrary these leaves must absolutely be removed from the processed products, given the fundamental necessity of having the possibility of processing and sizing up the single products without any inconveniences caused by any extraneous material, and then, of course, being able of offering these products with the maximum display and packaging which gives the desired high quality appearance.

Therefore it would be desirable, and it is the main object of the present invention, to provide a type of apparatus for emptying crates or similar containing horticultural products, which uses a basin filled with liquid wherein said products are offloaded, which substantially prevents the described problems related to the presence of extraneous items possibly offloaded from the crates containing horticultural products, and which, of course, can be produced and used using simple, tested and inexpensive technologies.

This object is achieved by the type of apparatus made and operating according to the appended claims.

Characteristics and advantages of the invention will be apparent from the following description, for exemplification only but not excluding, with reference to the appended drawings wherein:
- Figures from 1A to 1E show respective side plan views simplified and symbolic, and partially transparent of an apparatus according to the invention in respective five operating steps,
- Figure 2 shows a schematic top plan view of the same apparatus of the previous figures,
- Figure 3 shows the front plan view of the same apparatus of the previous figures,
- Figure 4 shows a view representing an inner portion of the basin of the previous apparatus, seen according to the sectional plane A - A of fig. 2,
- Figure 5 shows a view representing an inner portion of the basin of the previous apparatus, seen according to the sectional plane B - B of fig. 2,
- Figure 6 shows a perspective and simplified top view of the inner portion of the basin towards the front part of the apparatus,
- Figure 7 shows a perspective top view of the inner portion of the basin towards the rear part of the apparatus,
- Figure 8 shows a perspective view similar to that of fig. 6, but seen from the opposed point of view with respect to the basin of the apparatus,
- Figure 9 shows a symbolic and simplified representation of a part of the hydraulic and pumping circuit of an apparatus according to the invention.

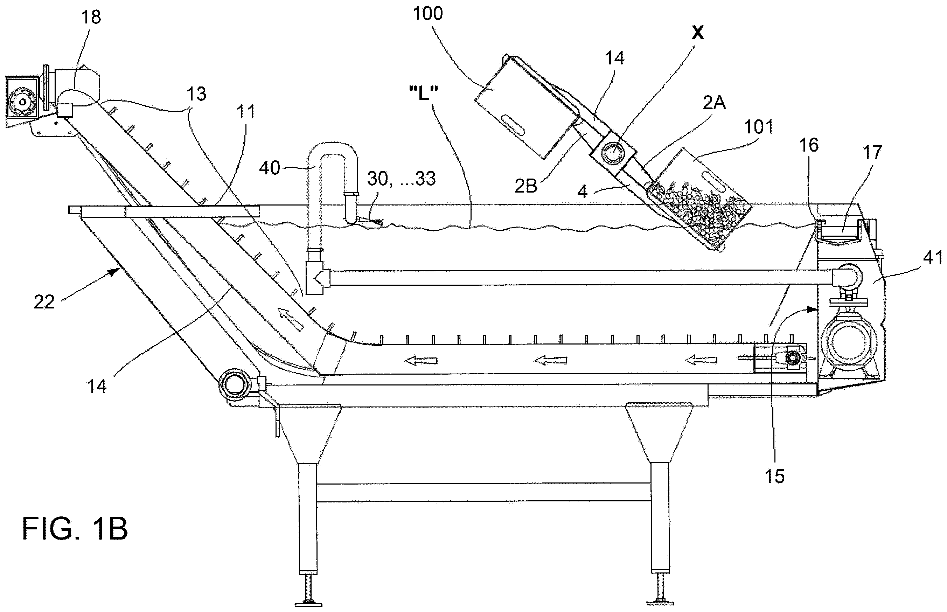

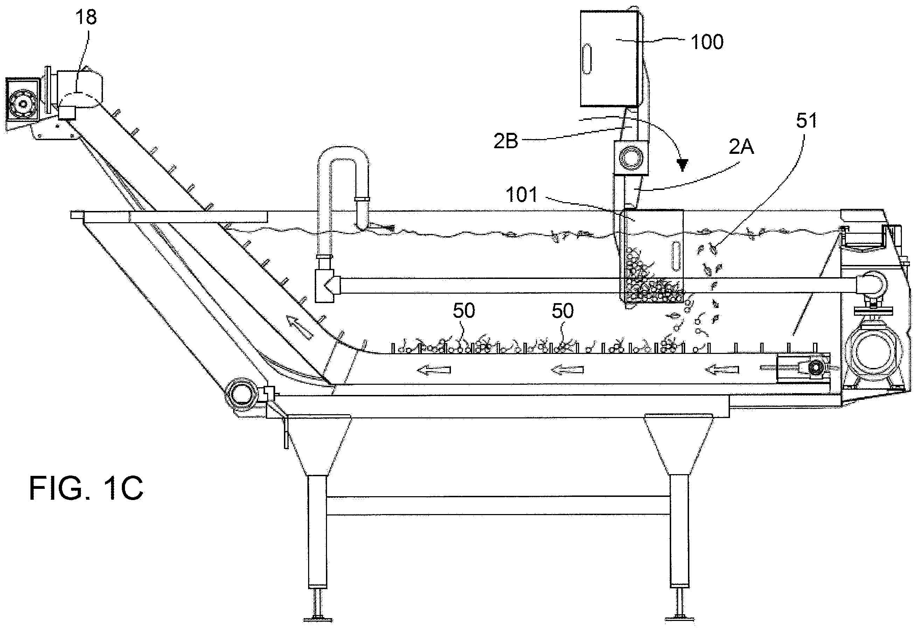

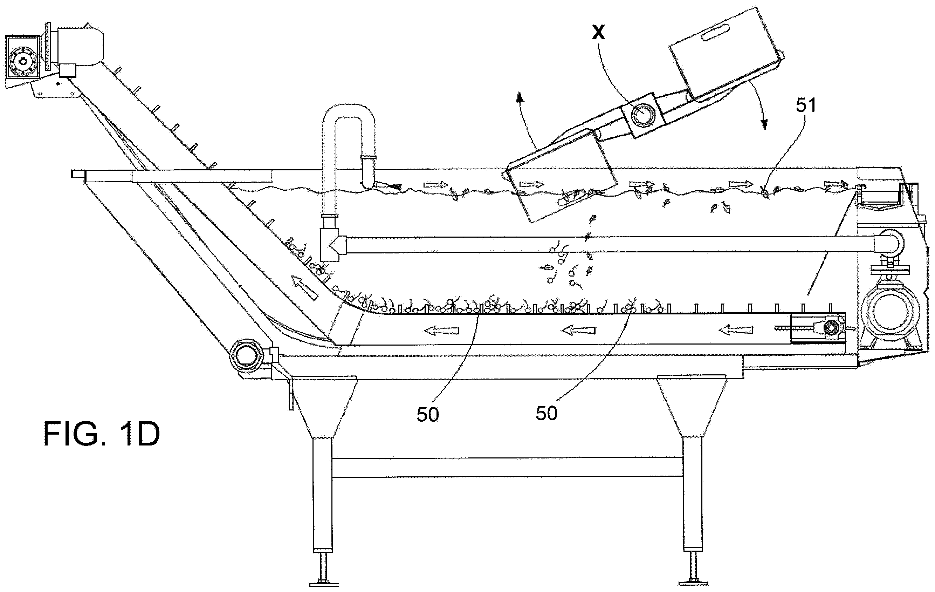

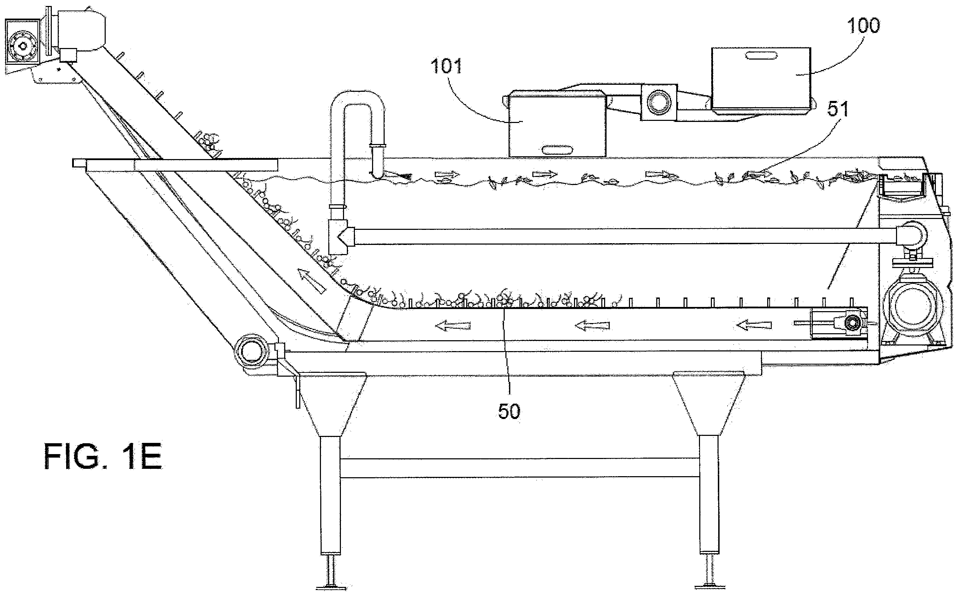

Figures from 1A to 3 show the three orthogonal views of an apparatus according to the known art, and which substantially comprises:
- a basin with an open top side 1, of a substantially parallelepiped shape, filled with a liquid such as water,
- conveying and gripping means, made of one or more gripping elements 2A, 2B (see figures from 1A to 1E) arranged higher than the liquid inside the basin, and inter-acting either with one or more tables 4, preferably rotating around a horizontal axis "X" and passing through the same tables 4, and therefore parallel to the liquid level; both said gripping elements 2A, 2B, and said rotating tables are arranged between each other in a constructive and functional way so as the single containers 100, 101, filled with the products 50 to be dealt with, are:
- introduced in sequence so as to lie with their respective bottom over said tables 4, and therefore on the liquid;
- blocked on the same tables through said gripping means 2A, 2B;
- rotated with respect to said axis "X" (Fig. 1B) so that it causes a substantial lowering of the respective container, down to such a level (Fig. 1C) that almost the whole container is immersed, of course with its content, which due to gravity falls onto and into the same liquid;
- further rotated so as to take the containers 100, 101 back to the initial upright position; about this operation various methods are possible: according to one of these, the container 100 goes back to the initial upright position rotating in the opposite direction with respect to the previous motion; according to another method, shown in Fig. 1D, the table 4, and the container engaged to it, continue rotating until they complete a 360° rotation. Such method is employed as, while the container is in the turning back position, on its upper face, a successive container of products 50, (Fig. 1E) is loaded so that the total working time is almost halved, as it is actually eliminated the time employed for the "return rotation" of the container just offloaded onto the liquid. Anyway, it has to be pointed out that the present patent does not concern, in any possible way, the handling of the containers 100, 101, before, during and after offloading the products into the liquid; therefore the foregoing is given for information only, as every type of method and means is feasible to offload the content of the containers into the liquid.

Then it follows:
- the removal from the apparatus of the just offloaded container;
- the introduction of a following container loaded with products;
- and the beginning of a new product offloading cycle.

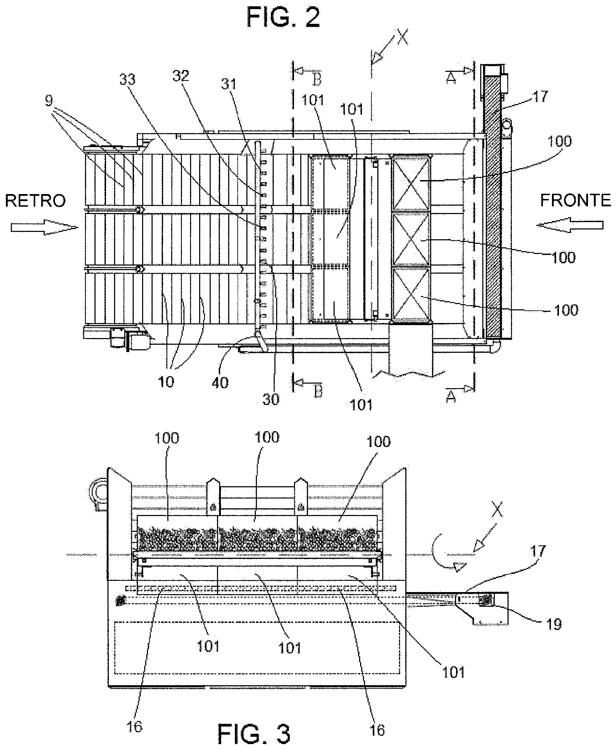

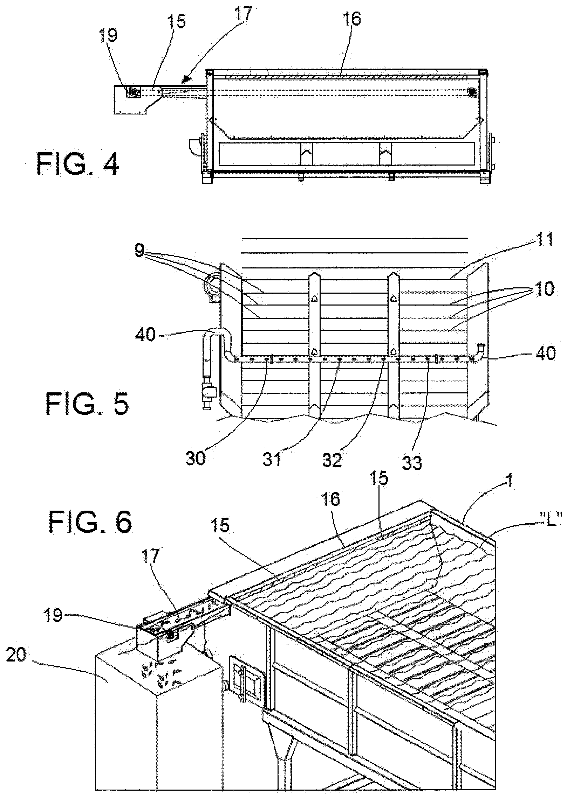

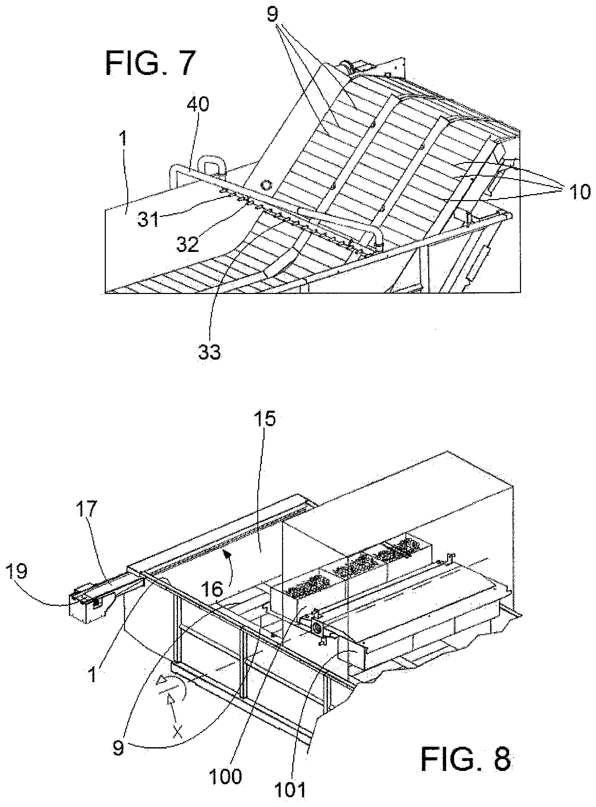

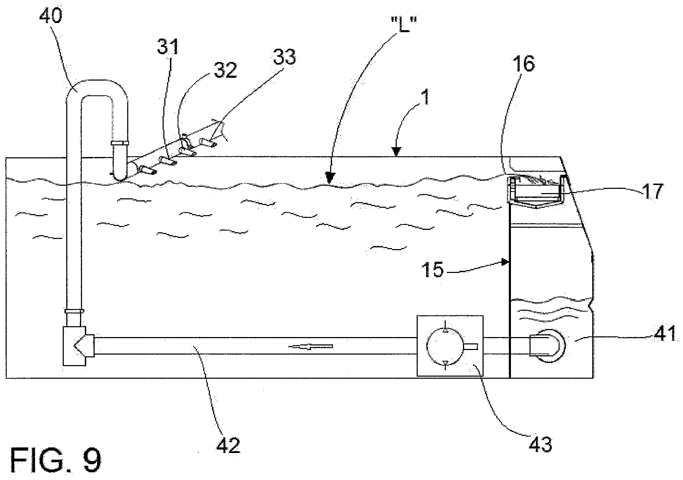

After said horticultural products 50 have been offloaded onto the liquid inside the basin, they fall onto its bottom wall, whereon at least a first conveyor, partly submerged, has been provided and mounted; in keeping with an improved effectiveness, figures 2, 5, 6, 7, 8 and 9 show that said (first) conveyors, identified with the reference numbers 5 and 6, are substantially identical from the constructive, assembling and operational points of view, they are parallel to each other and substantially they cover the whole bottom of the basin, except for the rear portion which will be told about soon after.

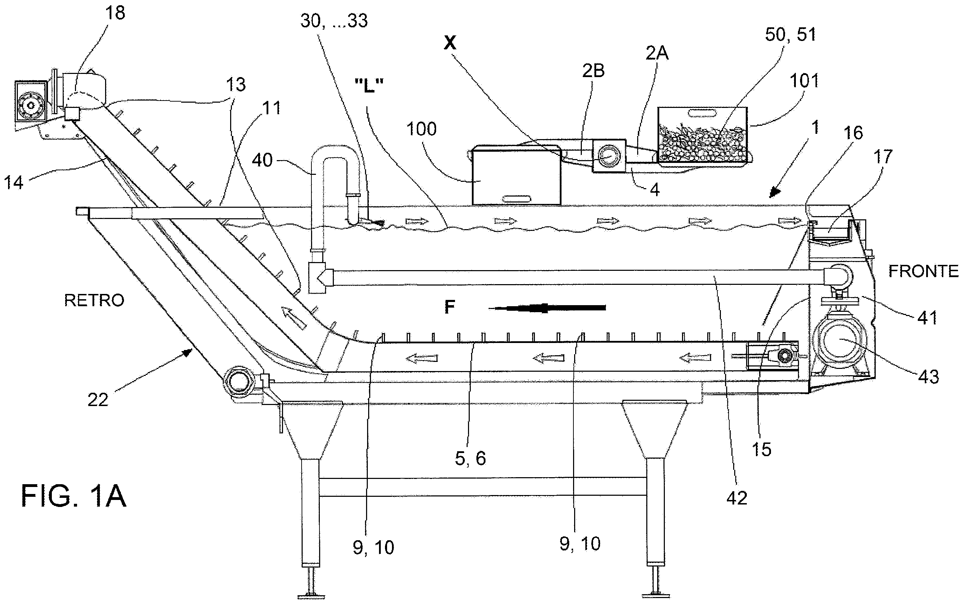

Said conveyors 5 and 6, which can also be more than one, depending on the dimensions and performances required by the apparatus, and in the figures there are shown three of them, substantially they are aligned in the Front-Rear direction, see figures 1 and 2, and they are separated by a low partition wall 7, useful only for constructive purposes.

They move in a continuous motion, and such motion is aligned in the same Front-Rear direction, shown by arrows "F".

Moreover they are adjacent to the basin bottom wall in the front portion (Front), while in the rear portion of the basin (Rear) they are raised along an inclined path 13 by suitable guides and members, known *per se* (see figures 1A..., 7 and 8 and their lateral profile in Fig. 1) up to an emersion position 11, from which they are further raised along the same inclined path until they reach a top position 18, from which they finally are left to fall for the following operations, as in said top position 18, said first conveyors go back towards the front position through a return path 14, see figures 1A and 1B.

Said conveyors are substantially flexible and are made in a very fine mesh of thin perforated material, so as to substantially be filtering means capable of letting the water drain and retaining the products therein when the various portions of the conveyors are made emerge.

Finally the same conveyors are provided with a respective sequence of steps, respectively 9 and 10, which have the purpose of engaging the single products dropped off thereon, and in particular of gripping and lifting them when the conveyor emerges from the liquid.

Therefore, after each container has been offloaded into the liquid, the relative products 50 fall back on the bottom and they are automatically gripped by said steps 9 and 10 which by means of the continuous motion of the respective conveyors 5 and 6, transport the products toward the rear portion, where they are lifted and due to the through holes of the fine mesh of the conveyors, the water falls back and only the products 50 reach the top position 18, (figures 1A... 1E, 2 and 8), from which they go on for the subsequent operations.

An apparatus according to the known art has been described so far.

According to the present invention, the problem of getting rid of the various floating items 51 and in particular of the leaves introduced in the various containers, and therefore inevitably they too offloaded in the liquid, is herewith solved providing a surface flow on the liquid, which then intercepts said leaves and drags them in the direction of the same flow.

In order to prevent said flow which drags the leaves from interfering with the same first conveyor after this one has emerged, which happens in the rear part of the basin, and which, above all, would substantially re-mix again the leaves with the same products, there are provided operating means and methods in order that the surface flow would move exactly in the direction opposed to that wherein it would meet the conveyors in the emersion area.

Therefore on the wall 15, which we will refer to as "draining wall", and which defines the basin 1 toward the front portion, which is clearly shown in figure 1 and 2, it is provided a spillway opening 16, substantially rectilinear and above all arranged horizontally when the apparatus is installed in its final position and arrangement.

Said spillway opening 16 is arranged at a level corresponding to, or a little lower, than the top liquid level "L" of the basin 1, so as a slight increase in such top liquid level "L" automatically causes the spillage of the top liquid level into said spillway opening 16.

Therefore, if it is increased, through means which will be described later, the height of the top liquid level "L" with respect to said opening 16, said spillage of the top surface liquid will automatically and obviously cause a slight but persistent surface flow, like a lamination, bound exactly towards said spillway opening 16, wherein it flows.

Since said surface flow is, in fact, that part of the liquid containing floating items 51, in particular leaves, it soon becomes apparent that this flow intercepts said leaves and conveys them towards said opening 16, and finally drags them into it, which, of course, permanently removes the leaves from the liquid.

In order to intercept said leaves and separate them from the water flow wherein they are mixed, advantageously the following means and methods are used.

With reference to figures 2, 3 and 6, the spout of water spilled from said opening 16 is caused to fall outside the basin 1 on a second flexible belt conveyor 17:
- prolonged, substantially horizontally, placed in a lower position and vertically with respect to said opening 16, with a closed path,
- operating traditionally, and with an automatic and continuous return.

Moreover, in order to be effective, said conveyor extends along the whole length of the opening 16, of course in order to intercept all the relative fallen liquid flow.

Said second conveyor is made as a filter which sifts and removes only the liquid flow and on the contrary, it intercepts and conveys away the floating items, in particular the leaves which have been transported through and beyond opening 16.

Therefore said belt conveyor 17, moving, takes all its portions and/or sections below said opening 16, and so each one of said conveyor parts are potentially able of intercepting the items present in the water flow from the opening 16 and of transporting them, thanks to the continuous motion of the same conveyor, towards the return and overturning area 19; in such area the conveyor turns back for the return travel and then it overturns and in said overturning point the leaves and any other item fallen on the conveyor are of course let fall.

Advantageously, below said overturning area 19 it is provided a discharge container 20, wherein said items and removed leaves are discharged, and from which they are periodically removed with known means.

Preferably, said second conveyor 17 moves in a continuous way, actuated by a relative electric motor 21 and relevant motion transmission devices, known *per se,* so as to ensure a total and continuous draining of the items which have gone through said opening 16.

With respect to means and methods of establishing said surface flow, it is convenient to note that the items 51 spilled from the containers 100, 101, and which float on the liquid surface, place themselves spontaneously on the whole surface.

Therefore, as said opening 16 is arranged on the draining wall 15 which is opposite said inclined path 13 of said first conveyors 5 and 6, it is clear that, in order to remove all floating items and push them towards the opening 16, it is necessary that said surface flow affects and covers as much liquid surface as possible, and therefore it is necessary that said surface flow is originated starting from an area as near as possible but also in front of said inclined path 13 that, as shown in the figures, is exactly opposite the draining wall 15 whereon the opening 16 is placed.

In fact it would not be possible to arrange the surface flow origin in a rear position with respect to said inclined path 13, that is very close to the basin wall 22 (see figures 1A and 1B) opposed to said draining wall 15, since, in this way, said surface flow would be obstructed directly and to the front in correspondence of the related emersion position 11 by the same first conveyors 5, 6, and related support structures, not shown.

Since said inclined path 13 actually defines, from one side, the liquid area wherein said floating items are, it is obvious and convenient to make said surface flow start from an area as close as possible to said emersion position 11 of said first conveyors 5, 6, and of course before these ones, as clearly shown in figures 1, 2, 7 and 8.

With reference to figures 1A, 1B, 2, 5, 7 and 8, said surface flow is conveniently originated from a plurality of nozzles 30, 31, 32, 33... which preferably are arranged:
- above the top liquid level,
- aligned as a rake prongs, of course oriented towards the immersion area of the containers and so towards said wall 15 and related opening 16 as well,
- before and next to said emersion position 11, slightly inclined downwards.

Furthermore, the above said figures do not leave any doubt on their mutual arrangement and with respect to the same basin.

Said nozzles can of course be fed independently; anyway, the following improving embodiment will be described again with reference to figures 2, 5, 7 and 8.

It is provided a single common hydraulic feed distributor 40 in a position at the back of said nozzles 30, 31, 32, 33... and which is hydraulically and mechanically connected to the same nozzles which are supported and fed with the liquid let into it and going through it.

Said liquid advantageously has to be pumped by the same nozzles with a defined pressure, in order to originate said top surface flow with the overall wanted speed and flow rate, so as to achieve the desired result.

For this purpose, the following advantageous solution is shown.

With reference to Figures 1A, 1B and 3, below the second conveyor 17 it is arranged a gathering collector 41 able of collecting and containing the liquid spilled from the opening 16 and filtered by the same second conveyor 17.

On the bottom, preferably funnel shaped or concave of said collector 41, there is arranged a conduit 42 hydraulically connecting the bottom of said collector 41 with said hydraulic distributor 40, and in the path of said conduit 42 there is arranged a hydraulic pump 43 able of pumping the liquid from said conduit 42 towards and into said hydraulic distributor 40.

Now, how the described devices operate will be apparent: from said collector 41 the water gathered therein is made flow into said conduit 42 from where, due to the pump 43 action, is sent under pressure into said hydraulic distributor 40, which makes it flow into said nozzles 30, 31, 32, 33..., from which respective spouts of water are let out and spurted on the top surface liquid, of course oriented towards said opening 16.

Obviously these spouts of water originate the desired surface flow, as the direction of the related spouts is oriented downward only in a limited way, but it is mainly oriented in a horizontal direction, so that the flow originated on the liquid will mainly be the desired surface flow.

It will also be appreciated that the flow emitted by said nozzles is a closed circuit flow, since the emitted water goes directly to the basin, and from here to the opening 16, and from this to said collector 41, and then, again through said conduit 42, said pump 43 and said distributor 40, again into said nozzles.

Such solution gives the advantage of not requiring any water wasting, and moreover, since it has been established its continuous recycling it ensures that, after having adjusted a constant liquid level and the flow rate of the nozzles, such values will remain constant during the machine operation, without any further adjustments.

A further improvement, useful in order to save energy while an intermittent apparatus operation, consists in as follows: given that in this kind of use such apparatus is fed discontinuously and irregularly, so that between a container and the successive one there can pass a certain amount of time, it can easily happen that the whole hydraulic circuit and the conveyors will continue their operation even in the temporary absence of containers and products to be processed.

Of course this causes a useless waste of energy to operate both said conveyors (both of them, the first conveyors 5 and 6, the second one 17), and to operate the pump 43.

In order to prevent this possible waste, said apparatus is, advantageously, provided with command and control means, not shown, able to:
- detect the absence, even a temporary one, of incoming containers in the apparatus;
- and, on the basis of said detection, interrupt the operation either of said conveyors and/or of said pump 43.

A further important functional improvement is related to a particular operative modality of said command and control means; in fact, it has been seen that, in certain circumstances, the above described surface flow could interfere with the horticultural products fall soon after their offloading from the respective container and during their fall towards the basin bottom.

To avoid this inconvenience, the present improvement consists in programming said command and control means so that said surface flow is activated only after completely emptying the container under processing and that is, practically, after a pre-determined interval from the offloading moment of the last offloaded container.

Further, since it has been experimented that after offloading the container on the liquid, and subsequent immersion of the horticultural products, the floating items remain floating for a time significantly longer than the time required for transporting the products out of the liquid by said first conveyors 5 and 6, advantageously said command and control means are devised and made so as to keep working said second conveyor 17, and said pump 43 for a pre-determined time after the last container has been offloaded, and this irrespective of the fact that further subsequent containers of products to be processed are introduced or not.

In this way it is ensured that the liquid is properly cleared of the possible items from the last processed container, and therefore that the leaves, left floating on the liquid after a temporary interruption of the apparatus, are intercepted and gathered by said first conveyors 5, 6, before the described process of removing floating items has effectively reactivated when the apparatus is restarted.

Of course, when the pre-determined time for the reactivation of said surface flow has expired, the same command and control means end this operating modality and get ready to begin a new cycle of:
- offloading;
- waiting;
- surface flow activation;
- surface flow stop;
- and new offloading cycle, etc...

## Claims

1. Apparatus for emptying containers or bins, (100, 101) filled with horticultural products (50), and comprising:
- a basin with an open top side (1) and filled with liquid, typically water,
- conveying and gripping means (2A, 2B, 4) for said containers, and arranged at a level substantially higher than the top liquid level (L) inside said basin, able of moving said containers over a defined area of said basin and of rotating around a defined horizontal axis (X), and of offloading the respective products,
- collecting means partially placed in the lower part of said basin, and partially outside of it, and able of collecting said horticultural products from said lower part and of lifting to an emersion level, comprising at least a first flexible conveyor (5,6), **characterized in that** said at least first flexible conveyor (5,6) slides along a closed path, partly over the bottom wall of said basin and partly in an emerged position, said apparatus further comprising separation and conveying means able to:
- deviate floating items (51) from the central surface of the liquid in said basin,
- move said floating items towards a surface area adjacent to a definite draining wall (15) of said basin,
- remove said floating items from said surface area adjacent to said definite draining wall (15) of said basin,
said separation and conveying means including:
- a spillway opening (16) which is substantially horizontal, prolonged, arranged along said draining wall (15), at a level corresponding to, or a little lower, than said top liquid level (L) in said basin,
surface lamination means able of causing on said top liquid in said basin a surface flow bound towards said draining wall (15), and towards said prolonged opening (16).

2. Apparatus according to claim 1, **characterized in that** it comprises filtering means of the liquid drained across said opening (16) and **in that** said filtering means comprise:
- a second flexible conveyor (17), which is prolonged, extended for a closed path and provided with a plurality of through holes, and preferably as a sieve, placed:
- outside said basin,
- basically in a lower position than said spillway opening (16), and preferably along the whole length of it,
- vertically below it,
- able of intercepting and of filtering the liquid flow falling from said draining opening,
- and to move along said closed path and maintaining said lower position so to bring successive parts of it below said spilling opening (16).

3. Apparatus according to claim 2, **characterized in that** actuation means are arranged, preferably an electric motor (21) and relevant motion transmission devices, apt of moving said second conveyor (17) in a continuous way.

4. Apparatus according to claim 2, **characterized in that** said lamination means comprises:
- a gathering collector (41) arranged below said second conveyor (17), and able of collecting the liquid spilled on, and filtered by it,
- a plurality of nozzles (30, 31, 32, 33....) placed:
- above and next to said top liquid level,
- on the zone of said basin, with respect to said conveying and gripping means (2A, 2B, 4), substantially opposed from said draining wall, and mainly oriented towards said spillway opening (16),
- at least a conduit (42) connecting said gathering collector (41) to said nozzles,
- pumping means (43) mounted on said conduit (42) and able of pumping the liquid therein contained into said nozzles (30, 31, 32, 33....).

5. Apparatus according to claim 4, **characterized in that** said nozzles are arranged parallel, equidistant to each other, and at the same distance from said draining wall.

6. Apparatus according to claim 4 or 5, **characterized in that** said nozzles are placed before the emersion position (11) of said at least first conveyor (5, 6), and between said position and the area of said basin wherein the containers are offloaded.

7. Apparatus according to claim 2, **characterized in that** an end (19) of said second conveyor (17), wherein it changes its position and turns back, is positioned above a discharge container (20) able of gathering the items possibly fallen by said second conveyor.

8. Apparatus according to any previous claim, **characterized in that** said conveying and gripping means (2A, 2B, 4) are able of imparting a partial or full rotation to said containers, around a rotation axis (X) which is substantially parallel to said top liquid level (L) and above it, so that said containers are at least partially immersed to a level which is lower to said top liquid level (L).

9. Apparatus according to any of claims 4 to 6 or 8, **characterized in that** it comprises command and control means able to command the operation of at least one of the following:
- said first (5, 6) or said second conveyor (17),
- said pumping means (43),
- for a pre-determined time length from the respective starting time-moment, and to prevent the respective operation for a time length from the rotation time-moment of one of said containers by action of said conveying and gripping means (2A, 2B, 4).

## Patentansprüche

1. Vorrichtung zum Entleeren von Behältern oder Gefäßen (100, 101), die mit Gartenbauprodukten (50) gefüllt sind, mit:
- einem Becken mit einer offenen Oberseite (1) und mit einer Flüssigkeit gefüllt, typischerweise Wasser,
- einer Transport- und Greifeinrichtung (2A, 2B, 4) für die Behälter, die auf einer Höhe angeordnet ist, die wesentlich höher als der obere Flüssigkeitspegel (L) im Inneren des Beckens ist, und die ausgebildet ist, die Behälter über einen festgelegten Bereich des Beckens zu bewegen, um eine definierte horizontale Achse (X) zu drehen und die entsprechenden Produkte auszuladen,
- einer Sammeleinrichtung, die teilweise in dem unteren Teil des Beckens und teilweise außerhalb davon angeordnet ist und ausgebildet ist, die gartenbautechnischen Produkte aus dem unteren Teil zu sammeln und auf eine Austrittshöhe anzuheben, und mindestens eine erste flexible Transporteinrichtung (5, 6) aufweist,
**dadurch gekennzeichnet, dass**
die mindestens eine erste flexible Transporteinrichtung (5, 6) entlang einer geschlossenen Bahn, teilweise über der Bodenwand des Beckens und teilweise in einer aufgetauchten Stellung gleitet, wobei die Vorrichtung ferner eine Separiert- und Transporteinrichtung umfasst, die ausgebildet ist, um:
- schwebende Komponenten (51) von der zentralen Oberfläche der Flüssigkeit in dem Bekken umzulenken,
- die schwebenden Komponenten in Richtung zu einem Oberflächenbereich benachbart zu einer festgelegten Ableitwand (15) des Beckens zu fördern,
- die schwebenden Komponenten aus dem Oberflächenbereich benachbart zu der festgelegten Ableitwand (15) des Beckens zu entfernen,
wobei die Separiert- und Transporteinrichtung aufweist:
- eine Auslauföffnung (16), die im Wesentlichen horizontal, gestreckt entlang der Ableitwand (15) auf einer Höhe angeordnet ist, die dem oberen Flüssigkeitspegel (L) in dem Becken entspricht oder etwas tiefer ist,
- eine Oberflächenlaminiereinrichtung, die in der Lage ist, auf der oberen Flüssigkeit in dem Becken eine Oberflächenströmung hervorzurufen, die zu der Ableitwand (15) und zu der gestreckten Öffnung (16) geführt ist.

2. Vorrichtung nach Anspruch 1, **dadurch gekennzeichnet, dass** sie eine Filtereinrichtung der Flüssigkeit aufweist, die über die Öffnung (16) geleitet wird und dass die Filtereinrichtung aufweist:
- eine zweite flexible Transporteinrichtung (17), die ausgedehnt, sich erschreckend für eine geschlossene Bahn und mit mehreren Durchgangsbohrungen versehen ist, und vorzugsweise als Sieb vorgesehen ist, die angeordnet ist:
- außerhalb des Beckens,
- im Wesentlichen in einer tieferen Position als die Auslauföffnung (16) und vorzugsweise entlang der gesamten Länge davon,
- vertikal darunter,
- und ausgebildet ist zum Abfangen und zum Filtern der Flüssigkeitsströmung, die von der Auslauföffnung ausströmt,
- und zum Bewegen entlang der geschlossenen Bahn und zur Beibehaltung der tieferen Position, sodass aufeinander folgende Teile davon unter die Auslauföffnung (16) gebracht werden.

3. Vorrichtung nach Anspruch 2, **dadurch gekennzeichnet, dass** eine Betätigungseinrichtung, vorzugsweise ein Elektromotor (21) und zugehörige Bewegungsübertragungseinrichtungen vorgesehen sind, um die zweite Transporteinrichtung (17) kontinuierlich in Bewegung zu versetzen.

4. Vorrichtung nach Anspruch 2, **dadurch gekennzeichnet, dass** die Laminiereinrichtung umfasst:
- einen Sammelkollektor (41), der unter der zweiten Transporteinrichtung (17) angeordnet und ausgebildet ist, die daraus auslaufende und gefilterte Flüssigkeit zu sammeln,
- mehrere Düsen (30, 31, 32, 33...), die angeordnet sind:
- über und benachbart zu dem oberen Flüssigkeitspegel,
- an der Zone des Beckens, in Bezug auf die Transport- und Greifeinrichtung (2A, 2B, 4), im Wesentlichen gegenüberliegend zu der Ableitwand und im Wesentlichen zu der Auslauföffnung (16) orientiert,
- mindestens eine Leitung (42), die den Sammelkollektor (41) mit den Düsen verbindet,
- eine Pumpeneinrichtung (43), die an der Leitung (42) montiert und ausgebildet ist, die darin enthaltene Flüssigkeit in die Düsen (30, 31, 32, 33...) zu pumpen.

5. Vorrichtung nach Anspruch 4, **dadurch gekennzeichnet, dass** die Düsen parallel, mit gleichem Abstand zueinander und gleichem Abstand zu der Ableitwand angeordnet sind.

6. Vorrichtung nach Anspruch 4 oder 5, **dadurch gekennzeichnet, dass** die Düsen vor der Austrittsposition (11) der mindestens einen ersten Transporteinrichtung (5, 6) und zwischen der Position und dem Bereich des Beckens, in welchem die Behälter ausgeladen werden, angeordnet ist.

7. Vorrichtung nach Anspruch 2, **dadurch gekennzeichnet, dass** ein Ende (19) der zweiten Transporteinrichtung (17), in der sie ihre Stellung ändert und zurückfährt, über einem Auslassbehälter (20) positioniert ist, der in der Lage ist, die Komponenten, die möglicherweise abgefallen sind, durch die zweite Transporteinrichtung zu sammeln.

8. Vorrichtung nach einem der vorhergehenden Ansprüche, **dadurch gekennzeichnet, dass** die Transport- und Greifeinrichtung (2A, 2B, 4) ausgebildet ist, an den Behältern eine Teildrehung oder vollständige Drehung um eine Drehachse (X) hervorzurufen, die im Wesentlichen parallel zu dem oberen Flüssigkeitspegel (L) und darüber liegt, sodass die Behälter zumindest teilweise bis zu einer Höhe eingetaucht sind, die unter dem oberen Flüssigkeitspegel (L) liegt.

9. Vorrichtung nach einem der Ansprüche 4 bis 6 oder 8, **dadurch gekennzeichnet, dass** sie umfasst
eine Befehls- und Steuereinrichtung, die ausgebildet ist, den Betrieb von mindestens einem der folgenden zu steuern;
- der ersten (5, 6) oder der zweiten Transporteinrichtung (17),
- der Pumpeneinrichtung (43),
- eine vorbestimmte Zeitdauer ab dem entsprechenden Startzeitpunkt, um den entsprechenden Betrieb für eine Zeitdauer ab dem Zeitpunkt des Drehens des einen der Behälter durch Einwirkung der Transport- und Greifeinrichtung (2A, 2B, 4) zu verhindern.

## Revendications

1. Appareil destiné à vider des conteneurs ou des bacs (100, 101) remplis de produits horticoles (50) et comprenant:
- un bassin avec un côté supérieur ouvert (1) et rempli avec un liquide, typiquement de l'eau,
- des moyens de convoyage et de préhension (2A, 2B, 4) pour lesdits conteneurs, et disposés à un niveau sensiblement supérieur au niveau de liquide supérieur (L) à l'intérieur dudit bassin, apte à déplacer lesdits conteneurs sur une zone définie dudit bassin et à tourner autour d'un axe horizontal défini (X), et à décharger les produits respectifs,
- des moyens de collecte partiellement placés dans la partie basse dudit bassin, et partiellement à l'extérieur de celui-ci, et aptes à collecter lesdits produits horticoles de ladite partie basse et de les soulever jusqu'à un niveau d'émersion, comprenant au moins un premier convoyeur (5, 6) flexible, **caractérisé en ce que** ledit premier convoyeur (5, 6) flexible coulisse le long d'un chemin fermé, partiellement au-dessus de la paroi de fond dudit bassin et partiellement dans une position émergée, ledit appareil comprenant en outre des moyens de séparation et de transport aptes à:
- dévier des articles flottants (51) de la surface centrale du liquide dans ledit bassin,
- déplacer lesdits articles flottants vers une zone de surface adjacente à une paroi de drainage (15) définie dudit bassin,
- retirer lesdits articles flottants de ladite zone de surface adjacente à ladite paroi de drainage (15) définie dudit bassin,
lesdits moyens de séparation et de transport comprenant :
- une ouverture (16) de déversoir qui est sensiblement horizontale, prolongée, disposée le long de ladite paroi de drainage (15), à un niveau correspondant à, ou un peu plus bas que, ledit niveau de liquide supérieur (L) dans ledit bassin,
un moyen de stratification de surface apte à provoquer sur ledit liquide supérieur dans ledit bassin un écoulement de surface lié vers ladite paroi de drainage (15), et vers ladite ouverture (16) prolongée.

2. Appareil selon la revendication 1, **caractérisé en ce qu'**il comporte des moyens de filtration du liquide drainé à travers ladite ouverture (16) et **en ce que** lesdits moyens de filtration comprennent:
- un second convoyeur (17) flexible, qui est prolongé, étendu pour un chemin fermé et muni d'une pluralité de trous traversants, et de préférence comme une passoire, placé:
- à l'extérieur dudit bassin,
- essentiellement dans une position plus basse que ladite ouverture (16) de déversoir, et de préférence sur toute la longueur de celle-ci,
- verticalement en dessous de celle-ci,
- apte à intercepter et à filtrer l'écoulement de liquide tombant de ladite ouverture de drainage,
- et de manière à se déplacer le long dudit chemin fermé et à maintenir ladite position basse de sorte à amener ses parties successivement en dessous de ladite ouverture (16) de déversoir.

3. Dispositif selon la revendication 2, **caractérisé en ce que** des moyens d'actionnement sont disposés, de préférence un moteur électrique (21) et des dispositifs de transmission de mouvement appropriés, aptes à déplacer de façon continue ledit second convoyeur (17).

4. Appareil selon la revendication 2, **caractérisé en ce que** ledit moyens de stratification comprend:
- un collecteur rassembleur (41) agencé au-dessous dudit second convoyeur (17), et capable de collecter le liquide renversé sur et filtré par celui-ci,
- une pluralité de buses (30, 31, 32, 33...) placées:
- au-dessus et proches dudit niveau de liquide supérieur,
- sur la zone dudit bassin, par rapport auxdits moyens de convoyage et de préhension (2A, 2B, 4), sensiblement opposés à ladite paroi de drainage, et principalement orientées vers ladite ouverture (16) de déversoir,
- au moins un conduit (42) reliant ledit collecteur rassembleur (41) auxdites buses,
- des moyens de pompage (43) montés sur ledit conduit (42) et aptes à pomper le liquide contenu dans celui-ci dans lesdites buses (30, 31, 32, 33...).

5. Appareil selon la revendication 4, **caractérisé en ce que** lesdites buses sont disposées parallèlement, équidistantes les unes des autres et à la même distance de ladite paroi de drainage.

6. Appareil selon la revendication 4 ou 5, **caractérisé en ce que** lesdites buses sont placées devant la position d'émersion (11) dudit au moins premier convoyeur (5, 6), et entre ladite position et la zone dudit bassin dans laquelle les conteneurs sont déchargés.

7. Appareil selon la revendication 2, **caractérisé en ce qu'**une extrémité (19) dudit second convoyeur (17), dans laquelle il change sa position et revient en arrière, est positionnée au-dessus d'un conteneur de déchargement (20) capable de rassembler les articles éventuellement tombés par ledit second convoyeur.

8. Appareil selon l'une quelconque des revendications précédentes, **caractérisé en ce que** lesdits moyens de transport et de préhension (2A, 2B, 4) sont capables de mettre en rotation partielle ou totale lesdits conteneurs, autour d'un axe de rotation (X) sensiblement parallèle audit niveau de liquide supérieur (L) et au-dessus de celui-ci, de sorte que lesdits conteneurs sont au moins partiellement immergés à un niveau qui est plus bas que ledit niveau de liquide supérieur (L).

9. Appareil selon l'une quelconque des revendications 4 à 6 ou 8, **caractérisé en ce qu'**il comprend des moyens de commande et de contrôle aptes à commander le fonctionnement d'au moins l'un des suivants:
- ledit premier convoyeur (5,6) ou ledit second convoyeur (17),
- lesdits moyens de pompage (43),
- pour une durée prédéterminée à partir de l'instant de démarrage respectif, et pour empêcher le fonctionnement respectif pour une durée de l'instant de rotation de l'un desdits conteneurs par action desdits moyens de transport et de préhension (2A, 2B, 4).
